# FASCICULE DE BREVET EUROPEEN

(11) **EP 2 475 561 B1**
(45) Date de publication et mention de la délivrance du brevet: **12.10.2016**
(21) Numéro de dépôt: 10748086.5
(22) Date de dépôt: 30.08.2010
(51) Int. Cl.: B60T 13/74, B60T 7/04

(54) **SYSTEME DE FREINS A SERVOFREIN ELECTRIQUE**
BREMSSYSTEM MIT ELEKTRISCHEM BREMSKRAFTVERSTÄRKER
BRAKE SYSTEM COMPRISING AN ELECTRIC BRAKE BOOSTER

(30) Priorité: 07.09.2009 FR 0904247
(43) Date de publication de la demande: 18.07.2012
(73) Titulaire: Robert Bosch GmbH, 70442 Stuttgart (DE)
(72) Inventeur: RICHARD, Philippe, F-77500 Chelles (FR); GAFFE, François, F-44420 La Turballe (FR); CAGNAC, Bastien, F-60500 Chantilly (FR); ANDERSON, Chris, F-75002 Paris (FR); SPROCQ, Raynald, F-77450 Esbly (FR)
(86) Numéro de dépôt international: PCT/EP2010/062625
(87) Numéro de publication internationale: WO 2011/026804

(56) Documents cités:
- DE-A1- 19 638 920
- DE-A1-102007 016 864
- DE-A1-102007 018 469
- US-A1- 2002 158 510

## Description

### Domaine de l'invention

La présente invention concerne un système de freins à servofrein électrique comportant un servofrein agissant de façon commandée, sur le maître-cylindre par une tige de poussée entraînée par le servofrein et actionnant le piston (piston primaire) du maître-cylindre, le servofrein étant relié par un piston plongeur à la tige de commande de la pédale de frein.

Un tel système de freins est connu de manière générale et dans le document DE 10 2007 01 68 64 A1.

### But de l'invention

L'invention a pour but un système de freins à servofrein permettant un freinage découplé entre la pédale de frein et le maître-cylindre, d'ajuster les caractéristiques efforts / pression ou course / pression et de modifier les caractéristiques du servofrein et aussi d'ajouter des fonctions actives indépendamment de l'action sur la pédale de frein.

### Exposé et avantages de l'invention

A cet effet, la présente invention concerne un système de freins à servofrein électrique du type défini ci-dessus caractérisé en ce que le servofrein comporte :
- un piston d'actionneur commandé par un moteur électrique par l'intermédiaire d'un entraînement à crémaillère,
- une chambre de simulateur délimitée par le piston plongeur et subdivisée par un piston intermédiaire en un volume arrière et un volume avant, variables,
   * le volume arrière étant délimité par le piston plongeur et le piston intermédiaire,
   * le volume avant étant délimité dans la chambre de simulateur par le piston intermédiaire,
- une conduite reliant le volume arrière à une conduite reliée au volume avant par l'intermédiaire d'une première électrovanne, la conduite étant reliée au réservoir par une seconde électrovanne ,
   * la première électrovanne étant commandée en position ouverte, sa position non commandée étant la position fermée,
   * la seconde électrovanne étant commandée en position fermée, sa position non commandée étant la position ouverte,
- le piston intermédiaire est relié à la tige de poussée portant une butée pour être poussée par le piston d'actionneur,
- la tige de poussée pouvant être poussée par le piston intermédiaire indépendamment du piston d'actionneur.

Le système de freins à servofrein électrique permet un freinage découplé, c'est-à-dire dans lequel l'action sur la pédale de frein n'est pas directement transmise au maître-cylindre mais par l'intermédiaire du servofrein. La commande est découplée en fonctionnement normal ; elle est directe en fonctionnement de secours par la tige de commande et le piston plongeur agissant sur le piston primaire du maître-cylindre.

Ce système de freins permet d'ajuster les caractéristiques efforts / pression mais aussi course / pression par une commande électronique.

Le système de freins selon l'invention permet de modifier les caractéristiques du servofrein et d'adjoindre des fonctions actives telles que le pré remplissage, les programmes ACC, ABB-H, sans que la pédale de frein ne soit concernée.

Suivant une autre caractéristique avantageuse, la conduite en sortie de la première électrovanne est reliée à un simulateur de frein.

Cela permet de faire bénéficier le conducteur d'une réaction simulant la réaction des circuits de freins alors que le système est totalement découplé.

Suivant une autre caractéristique, le piston d'actionneur se compose d'un manchon dont la surface extérieure comporte des crémaillères dans des positions diamétralement opposées par rapport à l'axe du système pour guider et entraîner en translation le piston d'actionneur chevauchant en partie la chambre de simulation.

Cette forme de réalisation permet d'intégrer de façon simple et peu encombrante l'entraînement à crémaillère dans le boîtier du servofrein.

Suivant une autre caractéristique avantageuse, le piston intermédiaire a une section supérieure à la section du piston plongeur.

Cette différence de section permet une démultiplication de l'effort lorsque le système de freins travaille en mode de secours sans l'assistance du servofrein.

Suivant une autre caractéristique avantageuse, le corps du servofrein se compose d'une partie avant et d'une partie arrière,
- la partie avant sensiblement cylindrique recevant l'arrière du boîtier du maître-cylindre par l'intermédiaire d'une couronne d'assemblage ainsi que les deux pignons de l'entraînement à crémaillères et le piston d'actionneur portant les crémaillères, cette partie avant étant également munie de la transmission et du moteur de l'entraînement à crémaillère ainsi que de la partie avant de la tige de poussée avec sa butée et le ressort de rappel,
- la partie arrière comportant le piston intermédiaire solidaire de la partie arrière de la tige de poussée, le ressort de rappel du piston intermédiaire ainsi que le piston plongeur et son rappel de rappel.

Suivant une autre caractéristique avantageuse, la partie arrière se compose de deux pièces dont la pièce avant forme la chambre de simulation avec une chemise recevant le piston intermédiaire et la pièce arrière logea le piston plongeur, le ressort de rappel du piston plongeur étant placé entre le piston plongeur et le piston intermédiaire.

Suivant une autre caractéristique avantageuse, le système de freins comporte un circuit de commande et un capteur de pression relié au volume arrière de la chambre de simulateur, compris entre le piston plongeur et le piston intermédiaire pour détecter la pression régnant dans ce volume et transmettre un signal de pression au circuit de commande, le circuit de commande étant relié à la première électrovanne et à la seconde électrovanne ainsi qu'au moteur de l'entraînement à crémaillères pour commander le fonctionnement normal du servofrein et le fonctionnement de secours.

L'invention concerne également un procédé de gestion d'un système de freins à servofrein électrique, ce procédé étant caractérisé en ce que, en mode de fonctionnement normal, le circuit de commande commande le moteur de l'entraînement à crémaillères du servofrein et la première électrovanne pour mettre en communication le volume arrière et le volume avant de la chambre de simulateur pour neutraliser l'interaction du piston plongeur et le piston intermédiaire, la tige de poussée étant uniquement entraînée par le piston d'actionneur. En mode de fonctionnement de secours, le circuit de commande commande la première électrovanne qui passe en position de fermeture séparant la communication de fluide entre le volume arrière et le volume avant de la chambre de simulateur et la seconde électrovanne pour s'ouvrir et mettre en communication le volume avant avec le réservoir, la tige de poussée étant uniquement actionnée par le déplacement du piston intermédiaire commandé par le déplacement du piston plongeur, le volume isolé étant maintenu constant par la fermeture de la première électrovanne.

Le procédé de gestion du système de freins permet de fonctionner soit en mode normal avec découplage de l'action de la pédale de frein et du maître-cylindre ou avec liaison directe sans découplage en cas de défaillance du servofrein ainsi qu'avec une commande directe du servofrein indépendamment de toute action sur la pédale de frein, pour différents modes de fonctionnement automatique du véhicule tels que la stabilisation de la vitesse, la circulation en file avec asservissement de la distance par rapport au véhicule précédent ou encore le freinage d'urgence indépendamment du conducteur.

Dans le cas du fonctionnement de secours, comme la liaison est coupée avec le simulateur, l'effort exercé par le conducteur n'est nullement absorbé par le simulateur.

### Dessins

La présente invention sera décrite ci-après de manière plus détaillée à l'aide d'un mode de réalisation de l'invention représenté dans les dessins annexés dans lesquels :
- la figure 1 est un schéma simplifié du système de freins à servofrein électrique représenté pour le mode de fonctionnement normal,
- la figure 2 est un schéma analogue à celui de la figure 1 mais simplifié, correspondant au mode de fonctionnement de secours,
- la figure 3 est une vue en coupe axiale selon III-III de la figure 4 d'un mode de réalisation du système de freins selon l'invention,
- la figure 4 est une vue de côté du système de freins,
- la figure 5 montre, dans ses parties 5A, 5B, respectivement :
   - à la figure 5A, la partie avant du système composé du maître-cylindre tandem et de la partie avant du servofrein,
   - à la figure 5B, la partie arrière du servofrein.

### Description d'un mode de réalisation de l'invention

Par convention, pour faciliter la description, dans le système de freins à servofrein électrique décrit ci-après, on distinguera le côté arrière et le côté avant pour les différents composants suivant qu'ils se situent du côté de la pédale de frein ou de celui du maître-cylindre ou encore qu'ils sont tournés vers l'une ou l'autre extrémité du système. Le système présente un axe XX par rapport auquel certaines parties du maître-cylindre et du servofrein sont alignés.

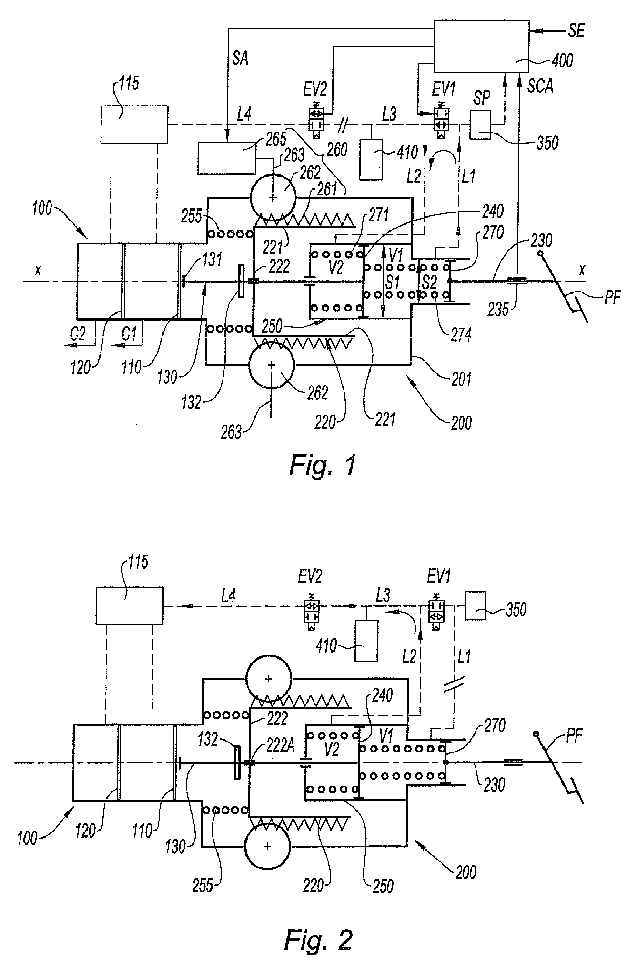

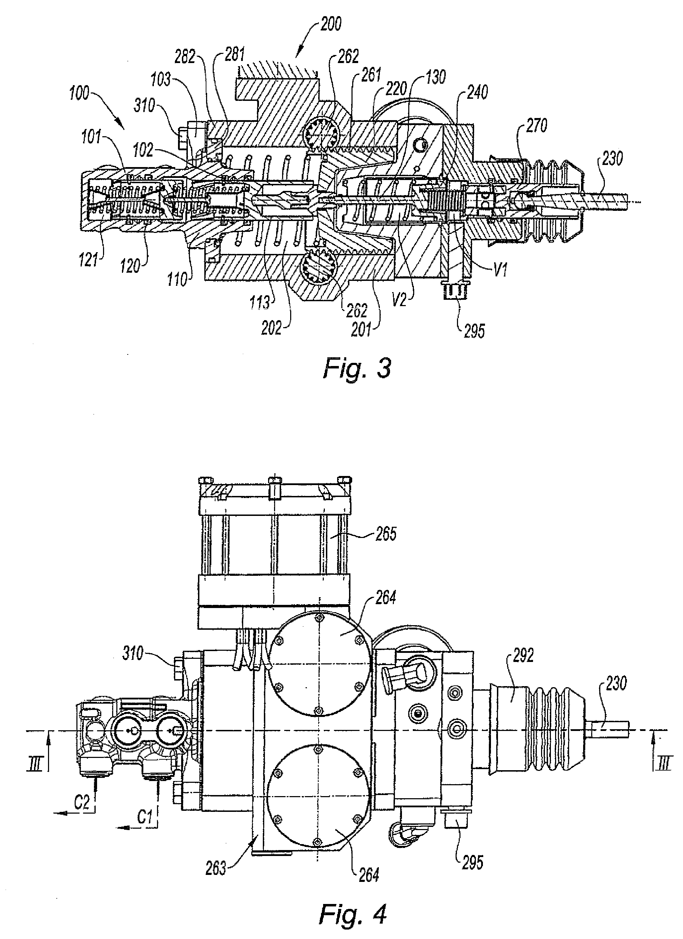

La description sera d'abord faite dans son principe de manière schématique en se référant aux figures 1 et 2 puis, de manière plus détaillée, à l'aide des figures 3 à 5.

Selon la figure 1, le système de freins à servofrein électrique comporte un maître-cylindre 100, par exemple un maître-cylindre tandem, ayant un piston primaire 110 et un piston secondaire 120, fournissant du liquide hydraulique sous pression aux deux circuits de frein C1, C2 en fonction de l'action exercée sur la pédale de frein PF. Le maître-cylindre 100 est combiné à un servofrein électrique 200 ayant un piston d'actionneur 220, activé par un moteur électrique 265. Le piston d'actionneur 220 est formé d'un manchon 221 muni d'un fond 222 traversé par une tige de poussée 130.

Dans cet exemple, le piston 220 est entraîné par une transmission à crémaillères.

L'entraînement à crémaillères 260 se compose de deux crémaillères 261 portées par le côtés extérieur du manchon 221 dans deux positions symétriques par rapport à l'axe XX du système de freins. Les crémaillères 261 engrènent avec deux pignons 262 reliés à une transmission 263. Cette transmission 263 est, par exemple, constituée par deux axes portant chacun l'un des deux pignons 262 et une roue à vis respective non représentée engrenant avec une vis portée par l'arbre de sortie du moteur 265. En pratique, l'arbre de sortie du moteur 265 est muni de deux vis à filetage de sens opposé de façon à entraîner chacune sa roue à vis et le pignon 262 solidaire de l'axe de celle-ci, suivant des mouvements de rotation de sens opposé. La roue à vis de grand diamètre par rapport à son pignon 262 assure ainsi une réduction du mouvement fourni par le moteur 265.

Le piston d'actionneur 220 coopère avec la tige de poussée 130 pour pousser le piston primaire 110. La tige de poussée 130 débouche dans la chambre de simulateur 250 qu'elle divise en deux volumes variables V1, V2 par un piston intermédiaire 240 fixé à la tige 130.

La tige de poussée 130 dont la tête 131 s'appuie contre le piston primaire 110, est munie d'une butée 132 contre laquelle s'appuie le piston d'actionneur 220 dans le sens de la poussée du piston primaire 110 ; mais inversement, la tige de poussée 130 peut avancer indépendamment du piston d'actionneur 220 dans le cas du fonctionnement de secours encore appelé « back-up ».

Un ressort de compression 255 appuyé contre le boîtier 201 du servofrein et le fond du piston d'actionneur 220 assure le rappel du piston 220.

Le rappel de la tige de poussée 130 en appui contre le piston d'actionneur 220 est assuré par un ressort de rappel 271 entre le fond de la chambre de simulateur 250 et le piston intermédiaire 240.

Le piston plongeur 270 est repoussé contre l'action de la pédale de frein par le fonctionnement du simulateur 410 et par un ressort de rappel 274 placé entre le piston intermédiaire 240 et le piston plongeur 270. Un capteur de course 235 détecte le déplacement de la tige 230 pour commander le servofrein dans les conditions exposées ultérieurement.

Dans la chambre de simulateur 250 délimitée par un piston plongeur 270 relié à la tige de commande 230 :
- le volume arrière V1 est compris entre le piston plongeur 270 et le piston intermédiaire 240,
- le volume avant V2 est compris entre le fond 222 de la chambre de simulateur 250 et le piston intermédiaire 240.

Le volume arrière V1 est reliée au volume avant V2 par deux conduites L1, L2 équipées d'une première électrovanne EV1 ; le volume arrière V1 est relié à un capteur de pression 350 par sa conduite L1 ; la conduite L3 en aval de l'électrovanne EV1 est reliée à un simulateur de freinage 410 et par l'intermédiaire d'une seconde électrovanne EV2 et d'une conduite L4, elle est reliée au réservoir de liquide de frein 115.

Les électrovannes EV1 et EV2 ont deux positions : une position ouverte ou passante et une position fermée ou bloquée. Ces positions sont inversées pour les deux électrovannes EV1, EV2 qui sont des électrovannes simples à rappel par ressort.

La première électrovanne EV1 est mise en position ouverte par l'application d'une tension électrique fournie par le circuit de commande 400. En position ouverte, elle relie la conduite L1 aux conduites L2 et L3. En l'absence de signal de commande, l'électrovanne EV1 passe en position inactive fermée pour laquelle elle coupe la communication entre la conduite L1 et les conduites L2 et L3.

La seconde électrovanne EV2 est commandée en position active fermée par un signal de commande. En position fermée, l'électrovanne EV2 coupe la communication entre la conduite L3 et la conduite L4. Elle est rappelée en position inactive en l'absence de signal de commande par son ressort de rappel. En position ouverte, l'électrovanne EV2 relie la conduite L3 à la conduite L4.

Le système est équipé d'un circuit de commande 400 auquel sont reliés le capteur de course 235 et le capteur de pression 350 pour commander le fonctionnement des électrovannes EV1, EV2 et celui du moteur électrique 265 du servofrein en fonction de programmes de freinage non détaillés.

Le capteur de pression 350 détecte une montée en pression produite par le piston plongeur 270 dans le volume arrière V1 de la chambre de simulateur 250 sous l'effet d'une action sur la pédale de frein PF. Le signal SP est transmis au circuit de commande 400 qui, ayant également reçu le signal SCA du capteur de course 235, contrôle par cette redondance, la volonté du conducteur. Le circuit de commande 400 met en marche (signal SA) le moteur 265. Celui-ci entraine la tige de poussée 130 par son piston 220 appliqué contre la butée 132 de la tige 130 qui pousse ainsi le piston primaire 110. Le conducteur reçoit en retour la réaction exercée par le simulateur 410 sur le liquide de frein dans le volume V1.

Cette pression du simulateur 410 est transmise par la conduite L3 et les conduites L2 et L1 aux volumes V1 et V2 qui sont ainsi à la même pression. Cet équilibre des pressions dans les volumes V1 et V2 de part et d'autre du piston intermédiaire 240 ne gêne pas l'entraînement de la tige de poussée 130 par le piston d'actionneur 220 mais permet de transmettre la réaction du système de freins sous forme d'une réaction simulée au piston plongeur 270, à la tige de commande 230 et ainsi à la pédale de frein PF.

Le fonctionnement du système de freins sera décrit ci-après en distinguant le fonctionnement normal, le fonctionnement de secours et des fonctionnements automatiques programmés. Ces différents fonctionnements sont gérés par le circuit de commande 400 en fonction du signal SCA fourni par le capteur de course 235 (encore appelé capteur de course absolue), du signal SP fourni par le capteur de pression 350 et de signaux extérieurs SE correspondant au fonctionnement de secours (absence d'alimentation électrique du moteur 265) ou de commande automatique pour faire fonctionner le système de freins indépendamment de l'action sur la pédale de frein PF.

### A) Fonctionnement normal (figure 1) :

En début de fonctionnement, le circuit de commande 400 d'une part, ouvre l'électrovanne EV1 de sorte que les volumes V1, V2 communiquent et d'autre part, ferme l'électrovanne EV2 de sorte que la conduite L1 reliée au volume V1 est coupée du réservoir 115.

Les volumes V1, V2 communiquent et le piston intermédiaire 240 est hydrauliquement neutre dans la chambre de simulateur 250 ; son mouvement suit seulement le piston d'actionneur 220 qui pousse la tige 130 par la butée 132.

La pression du liquide dans le volume V1 de la chambre de simulateur 250 est commandée par le simulateur 410 ce qui permet au conducteur de percevoir une réaction qui varie suivant la caractéristique des ressorts du simulateur (ces détails ne sont pas représentés) ; globalement, la réaction du simulateur 410 augmente avec la poussée exercée sur la pédale de frein selon une courbe de réaction non linéaire. Cette réaction du simulateur est une fonction connue non détaillée. En parallèle, le signal SCA du capteur de course 235 et le signal SP de la pression détectée par le capteur de pression 350 sont transmis au circuit de commande 400 qui génère le signal d'actionnement SA du moteur 265 du servofrein 200 entraînant le piston d'actionneur 220 poussant le piston primaire 110 du maître-cylindre 100. Il n'y a pas de contact entre le piston plongeur 270 et la tige de poussée 130.

### B) Fonctionnement de secours (figure 2) :

En cas de panne électrique, le servofrein 200 ne peut plus assister le freinage. La coupure électrique produit le rappel des deux électrovannes EV1, EV2 dans leur position inactive par leur ressort de rappel :
l'électrovanne EV1 se ferme et l'électrovanne EV2 s'ouvre de sorte que :
   - la volume V1 est isolé,
   - le volume V2 communique librement avec le réservoir 115.
Cela signifie que le déplacement du piston plongeur 270 sous l'effet d'une poussée exercée sur la pédale de frein PF, transmise par la tige de commande 230, déplace le liquide du volume V1, non variable, qui pousse le piston intermédiaire 240 qui pousse lui-même le piston primaire 110 par la tige de poussée 130 avançant par rapport au piston d'actionneur 220 resté immobile.

Le volume V2 se vide dans le réservoir 115 par les conduites L2, L3, L4 à travers de l'électrovanne EV2, sans opposer de réaction à l'avancée du piston intermédiaire 240.

Dans la mesure où la section S1 du piston plongeur 270 est inférieure à la section S3 du piston intermédiaire 240, il y a un effet de démultiplication, ce qui permet d'exercer sur le piston primaire 110 par l'intermédiaire du piston intermédiaire 240, une force plus importante que celle exercée sur la pédale de frein, le travail étant conservé. Dans le cas d'un appui rapide sur la pédale d'accélérateur, le fonctionnement du système de freins est au moins au début le même que celui qui vient d'être décrit ci-dessus.

### C) Fonctionnement de secours mécanique :

En cas de perte hydraulique totale dans les chambres V1 et V2, le mouvement de la pédale de frein PF est transmis directement par le piston 270, le ressort 274 comprimé et la tige de poussée 130.

### D) Fonctionnement par commande programmée (figure 1) :

Le circuit de commande 400 peut également recevoir des instructions du système de gestion du fonctionnement du véhicule pour agir directement sur le système de freins, indépendamment de toute action sur la pédale de frein, par exemple pour des opérations de régulation de vitesse, de régulation de distance par rapport à un véhicule qui précède ou pour le freinage d'urgence.

Le circuit de commande 400 envoie alors un signal SA au moteur 265 pour entraîner le piston d'actionneur 220 et la tige de poussée 130 et commander le maître-cylindre 100, indépendamment de toute action sur la pédale de frein. Le piston intermédiaire est neutre puisque les volumes V1 et V2 communiquent librement par l'intermédiaire des conduites L1 et L2 à travers la première électrovanne EV1.

Ce fonctionnement par commande programmée suppose que le moteur 265 de l'entraînement à crémaillères 260 puisse fonctionner, c'est-à-dire que son alimentation électrique est assurée ce qui correspond au moins pour ce point à la situation représentée à la figure 1, la commande du moteur 265 étant faite par le circuit de commande 400 envoyant un signal de commande SA.

Ce fonctionnement par commande programmée, quel que soit le signal extérieur SE appliqué directement au circuit de commande 400 indépendamment d'une action sur la pédale de frein PF, suppose que les volumes V1, V2 puissent communiquer pour que le piston intermédiaire 240 soit neutre ce qui suppose que l'électrovanne EV1, EV2 soit dans la position représentée à la figure 1 ou encore que les deux volumes V1, V2 soient reliés au réservoir 115 ce qui suppose que la vanne EV1 occupe la position de la figure 1 et la vanne EV2, la position non commandée, pour relier les conduites L2 et L4.

Pour cette commande programmée indépendamment de l'action sur la pédale de frein PF, il n'y a pas lieu de transmettre de réaction à la pédale d frein par le simulateur 410.

Dans certaines conditions de fonctionnement, le circuit de commande 400 peut activer la première électrovanne EV1 et mettre la seconde électrovanne EV2 en position de repos de façon que les conduites L1, L2, L3, L4 soient toutes reliées au réservoir de liquide de frein 115.

La structure détaillée du maître-cylindre et du servofrein du système de freins sera décrite ci-après à l'aide des figures 3 à 5.

Le système est formé de trois sous-ensembles, à savoir
- le maître-cylindre 100, et
- le servofrein 200 composé d'une partie avant 280 et d'une partie arrière 290, assemblées par des tirants pour être fixées au tablier du véhicule séparant l'enceinte moteur et l'habitacle.

Les éléments des chambres V1, V2 et du réservoir de liquide de frein 115 ainsi que le circuit de commande 400 ne sont ni représentés aux figures 3-5B ni décrits.

Le maître-cylindre tandem 100 a une structure connue, représentée de façon détaillée à la figure 3 mais dont la description sera simplifiée. Son boîtier 101 comporte un piston primaire 110 et un piston secondaire 120 définissant une chambre primaire 111 et une chambre secondaire 121 reliées chacune respectivement à un circuit de frein. Le piston primaire 110 comporte un prolongement 113 ouvert à l'arrière, et un logement axial 114 pour recevoir la tête 131 de la tige de poussée 130 actionnée par le servofrein 200 ou par la tige de commande 230 en cas de panne du servofrein. En position de repos du maître-cylindre tandem 100, le prolongement 113 du piston primaire 110 vient en saillie dans la chambre 202 du servofrein 200.

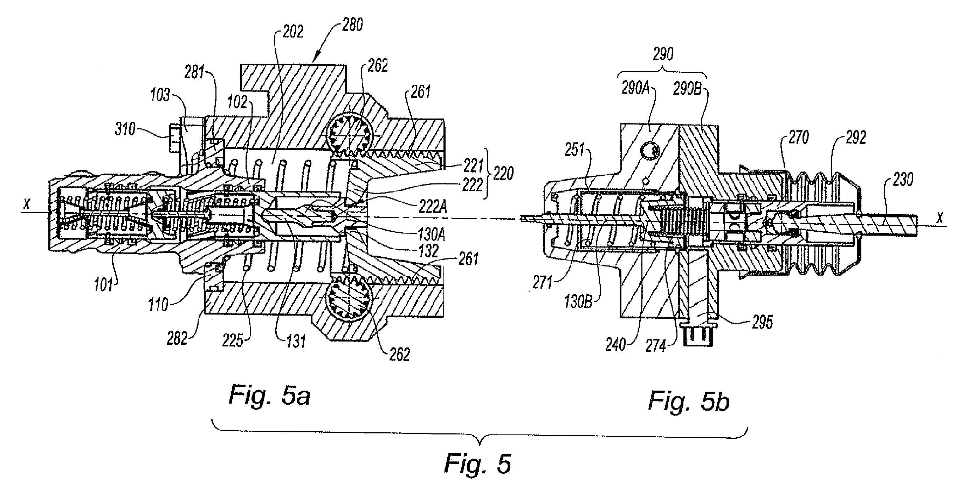

Selon le mode de réalisation, la partie avant 280 du servofrein reçoit l'arrière 102 du corps 101 du maître-cylindre 100 et porte le moteur 265, la transmission 263 donnée à titre d'exemple et apparaissant à la figure 4 comme logement de l'arbre de sortie du moteur 265 et de ses deux vis engrenant chacune avec une roue à vis de grand diamètre ; ces roues à vis sont logées chacune dans un boîtier 264 alors que les pignons 262 portés par les roues à vis apparaissent aux figures 3, 5A, 5B. Les crémaillères 261 et les pignons 262 sont dans des positions symétriques par rapport à l'axe XX pour transmettre le couple de façon répartie et équilibrée au piston d'actionneur 220.

La tige de poussée 130 est composée d'un élément avant 130A et d'un élément arrière 130B pour faciliter la réalisation et le montage du servofrein.

L'élément avant 130A est en appui par sa tête 131 contre le fond du piston primaire 110 ; il porte la butée 132 et se prolonge vers l'arrière au-delà de la butée 132 en traversant (dans cette position) un orifice central 222A du fond 222 du piston d'actionneur 220.

L'élément arrière 130B se compose du prolongement de la tige portant le piston intermédiaire 240 (figures 3, 5B).

La partie arrière 290 est en fait constituée de deux pièces 290A, 290B dont l'une (290A) forme la chambre de simulateur 250 recevant une chemise 251 pour le piston intermédiaire 240 et son ressort de rappel 271. Cette chemise 251 facilite la réalisation de la pièce 290A et son montage.

La pièce 290B reçoit le piston plongeur 270, la tige de commande 230 et porte le soufflet 292 entourant l'arrière du piston plongeur 270. La pièce arrière 290B comporte également un connecteur 295 pour le branchement du capteur de déplacement 235.

Selon les figures 5A, 5B, la partie avant 130A de la tige 130 est installée dans la partie avant 280 du corps du servofrein 200 et la partie arrière 130B de la tige 130, dans la partie arrière 290 du corps de servofrein 200.

L'assemblage entre le boîtier 101 du maître-cylindre 100 et la partie avant 280 du servofrein 200 se fait par l'intermédiaire d'une couronne d'assemblage 281 interposée entre le prolongement 102 du corps 101 et le bord 282 de la forme tubulaire de la partie avant 280. L'assemblage se fait par des tirants 310 fixés dans la pièce 290B de la partie arrière 290.

Le système de freins à servofrein électrique s'applique à l'industrie des équipements de freins pour les véhicules automobiles.

### NOMENCLATURE

- 100: maître-cylindre tandem
- 101: corps du maître-cylindre tandem
- 102: arrière du corps
- 103: bride
- 110: piston primaire
- 113: prolongement du piston primaire
- 115: réservoir de liquide de frein
- 121: chambre du piston secondaire
- 130: tige de poussée
- 130A: élément avant de la tige 130
- 130B: élément arrière de la tige 130
- 131: tête de la tige de poussée 130
- 132: butée de la tige de poussée 130

- 200: servofrein électrique
- 201: boîtier du servofrein
- 202: chambre
- 220: piston d'actionneur
- 221: manchon
- 222: fond
- 222A: orifice central
- 230: tige de commande
- 231: tête de la tige de commande
- 235: capteur de course
- 240: piston intermédiaire
- 250: chambre de simulateur
- 251: chemise
- 255: ressort de rappel
- 260: entraînement à crémaillères
- 261: crémaillère
- 262: pignon
- 263: transmission
- 264: boîtier de la roue à vis
- 265: moteur électrique
- 270: piston plongeur
- 271: ressort de rappel
- 274: ressort de rappel
- 280: partie avant du corps du servofrein
- 281: couronne
- 282: bord de la partie avant 280
- 290: partie arrière du corps du servofrein
- 290A, 290B: pièces formant la partie arrière 290

- 291: bride
- 292: soufflet
- 295: connecteur

- 310: tirants
- 350: capteur de pression

- 400: circuit de commande
- 410: simulateur de frein

- C1, C2: circuits de freins
- EV1, EV2: électrovannes
- V1: volume avant
- V2: volume arrière
- L1-L4: conduites
- SP: signal de pression
- SE: signal extérieur
- SA: signal d'actionnement
- SCA: signal de course
- PF: pédale de frein

## Revendications

1. Système de freins à servofrein électrique comportant un servofrein agissant de façon commandée, sur le maître-cylindre par une tige de poussée entrainée par le servofrein et actionnant le piston (piston primaire) du maître-cylindre, le servofrein étant relié par un piston plongeur à la tige de commande de la pédale de frein,
**caractérisé en ce que**
le servofrein (200) comporte
- un piston d'actionneur (220) commandé par un moteur électrique (265) par l'intermédiaire d'un entraînement à crémaillère (260),
- une chambre de simulateur (250) délimitée par le piston plongeur (270) et subdivisée par un piston intermédiaire (240) en un volume arrière (V1) et un volume avant (V2), variables,
* le volume arrière (V1) étant délimité par le piston plongeur (270) et le piston intermédiaire (240),
* le volume avant (V2) étant délimité dans la chambre de simulateur (250) par le piston intermédiaire (240),
- une conduite (L1) reliant le volume arrière (V1) à une conduite (L2) reliée au volume avant (V2) par l'intermédiaire d'une première électrovanne (EV1), la conduite (L2) étant reliée au réservoir (115) par une seconde électrovanne (EV2),
* la première électrovanne (EV1) étant commandée en position ouverte, sa position non commandée étant la position fermée,
* la seconde électrovanne (EV2) étant commandée en position fermée, sa position non commandée étant la position ouverte,
- le piston intermédiaire (240) est relié à la tige de poussée (130) portant une butée (132) pour être poussée par le piston d'actionneur (220),
- la tige de poussée (130) pouvant être poussée par le piston intermédiaire (240) indépendamment du piston d'actionneur (220).

2. Système de freins selon la revendication 1,
**caractérisé en ce que**
la conduite (L3) en sortie de la première électrovanne (EV1) est reliée à un simulateur de frein (410).

3. Système de freins selon la revendication 1,
**caractérisé en ce que**
le piston d'actionneur (220) se compose d'un manchon (221) dont la surface extérieure comporte des crémaillères (261) dans des positions diamétralement opposées par rapport à l'axe (XX) du système pour guider et entraîner en translation le piston d'actionneur (220) chevauchant en partie la chambre de simulation (250).

4. Système de freins selon la revendication 1,
**caractérisé en ce que**
le piston intermédiaire (240) a une section (S1) supérieure à la section (S2) du piston plongeur (270).

5. Système de freins selon la revendication 1,
**caractérisé en ce que**
le corps (201) du servofrein (200) se compose d'une partie avant (280) et d'une partie arrière (290),
- la partie avant (280) sensiblement cylindrique recevant l'arrière (102) du boîtier (101) du maître-cylindre (100) par l'intermédiaire d'une couronne d'assemblage (281) ainsi que les deux pignons (262) de l'entraînement à crémaillères (260) et le piston d'actionneur (220) portant les crémaillères (261), cette partie avant (280) étant également munie de la transmission (263) et du moteur (265) de l'entraînement à crémaillère (260) ainsi que de la partie avant (130A) de la tige de poussée (130) avec sa butée (132) et le ressort de rappel (255),
- la partie arrière (290) comportant le piston intermédiaire (240) solidaire de la partie arrière (130B) de la tige de poussée, le ressort de rappel (271) du piston intermédiaire (240) ainsi que le piston plongeur (270) et son ressort de rappel (274).

6. Système de freins selon la revendication 5,
**caractérisé en ce que**
la partie arrière (290) se compose de deux pièces (290A, 290B) dont la pièce avant (290A) forme la chambre de simulation (250) avec une chemise (251) recevant le piston intermédiaire (240) et la pièce arrière (290B) logea le piston plongeur (270),
le ressort de rappel (274) du piston plongeur (270) étant placé entre le piston plongeur (270) et le piston intermédiaire (240).

7. Système de freins selon la revendication 1,
**caractérisé en ce qu'**
il comporte un circuit de commande (400) et un capteur de pression (350) relié au volume arrière (V1) de la chambre de simulateur (250), compris entre le piston plongeur (270) et le piston intermédiaire (240) pour détecter la pression régnant dans ce volume (V1) et transmettre un signal de pression (SP) au circuit de commande (400),
le circuit de commande (400) étant relié à la première électrovanne (EV1) et à la seconde électrovanne (EV2) ainsi qu'au moteur (265) de l'entraînement à crémaillères (260) pour commander le fonctionnement normal du servofrein et le fonctionnement de secours.

8. Procédé de gestion d'un système de freins à servofrein électrique selon l'une quelconque des revendications précédentes,
**caractérisé en ce qu'**
- en mode de fonctionnement normal, le circuit de commande (400) commande le moteur (265) de l'entraînement à crémaillères (260) du servofrein et la première électrovanne (EV1) pour mettre en communication le volume arrière (VI) et le volume avant (V2) de la chambre de simulateur (250) pour neutraliser l'interaction du piston plongeur (270) et le piston intermédiaire (240),
la tige de poussée (130) étant uniquement entrainée par le piston d'actionneur (220),
- en mode de fonctionnement de secours, le circuit de commande (400) commande la première électrovanne (EV1) qui passe en position de fermeture séparant la communication de fluide entre le volume arrière (V1) et le volume avant (V2) de la chambre de simulateur (250) et la seconde électrovanne (EV2) pour s'ouvrir et mettre en communication le volume avant (V2) avec le réservoir (115), la tige de poussée (130) étant uniquement actionnée par le déplacement du piston intermédiaire (240) commandé par le déplacement du piston plongeur (270), le volume (V1) isolé étant maintenu constant par la fermeture de la première électrovanne (EV1).

## Patentansprüche

1. Bremssystem mit elektrischem Bremskraftverstärker, das einen Bremskraftverstärker umfasst, der gesteuert auf den Hauptzylinder durch einen Schubschaft wirkt, der von dem Bremskraftverstärker angetrieben wird und den Kolben (Primärkolben) des Hauptzylinders betätigt, wobei der Bremskraftverstärker durch einen Tauchkolben mit dem Steuerschaft des Bremspedals verbunden ist,
**dadurch gekennzeichnet, dass**
der Bremskraftverstärker (200) Folgendes umfasst:
- einen Betätigungskolben (220), der von einem Elektromotor (265) über einen Zahnstangenantrieb (260) gesteuert wird,
- eine Simulatorkammer (250), die durch den Tauchkolben (270) abgegrenzt und durch einen Zwischenkolben (240) in ein hinteres Volumen (V1) und ein vorderes Volumen (V2), die variabel sind, unterteilt ist,
* wobei das hintere Volumen (V1) durch den Tauchkolben (270) und den Zwischenkolben (240) abgegrenzt ist,
* wobei das vordere Volumen (V2) in der Simulatorkammer (250) durch den Zwischenkolben (240) abgegrenzt ist,
- eine Leitung (L1), die das hintere Volumen (V1) mit einer Leitung (L2) verbindet, die mit dem vorderen Volumen (V2) über ein erstes Magnetventil (EV1) verbunden ist, wobei die Leitung (L2) mit dem Behälter (115) durch ein zweites Magnetventil (EV2) verbunden ist,
* wobei das erste Magnetventil (EV1) in offene Position gesteuert wird, wobei seine nicht gesteuerte Position die geschlossene Position ist,
* wobei das zweite Magnetventil (EV2) in geschlossene Position gesteuert wird, wobei seine nicht gesteuerte Position die offene Position ist,
- der Zwischenkolben (240) mit dem Schubschaft (130) verbunden ist, der einen Anschlag (132) trägt, um von dem Betätigungskolben (220) geschoben zu werden,
- wobei der Schubschaft (130) von dem Zwischenkolben (240) unabhängig von dem Betätigungskolben (220) geschoben werden kann.

2. Bremssystem nach Anspruch 1,
**dadurch gekennzeichnet, dass**
die Leitung (L3) am Ausgang des ersten Magnetventils (EV1) mit einem Bremssimulator (410) verbunden ist.

3. Bremssystem nach Anspruch 1,
**dadurch gekennzeichnet, dass**
der Betätigungskolben (220) aus einem Stutzen (221) besteht, dessen äußere Oberfläche Zahnstangen (261) in diametral zu der Achse (XX) des Systems entgegengesetzten Positionen umfasst, um den Betätigungskolben (220), der teilweise auf der Simulationskammer (250) sitzt, zu führen und in Verschiebung anzutreiben.

4. Bremssystem nach Anspruch 1,
**dadurch gekennzeichnet, dass**
der Zwischenkolben (240) einen Querschnitt (S1) hat, der größer ist als der Querschnitt (S2) des Tauchkolbens (270).

5. Bremssystem nach Anspruch 1,
**dadurch gekennzeichnet, dass**
der Körper (201) des Bremskraftverstärkers (200) aus einem vorderen Teil (280) und einem hinteren Teil (290) besteht,
- wobei der im Wesentlichen zylindrische vordere Teil (280) die Rückseite (102) des Gehäuses (101) des Hauptzylinders (100) über einen Zusammenfügekranz (281) aufnimmt, sowie die zwei Ritzel (262) des Zahnstangenantriebs (260) und den Betätigungskolben (220), der die Zahnstangen (261) trägt, wobei dieser vordere Teil (280) auch mit dem Getriebe (263) und dem Motor (265) des Zahnstangenantriebs (260) sowie dem vorderen Teil (130A) des Schubschafts (130) mit seinem Anschlag (132) und der Rückstellfeder (255) versehen ist,
- wobei der hintere Teil (290) den Zwischenkolben (240) umfasst, der fest mit dem hinteren Teil (130B) des Schubschafts, der Rückstellfeder (271) des Zwischenkolbens (240) sowie dem Tauchkolben (270) und seiner Rückstellfeder (274) verbunden ist.

6. Bremssystem nach Anspruch 5,
**dadurch gekennzeichnet, dass**
der hintere Teil (290) aus zwei Teilen (290A, 290B) besteht, von welchen das vordere Teil (290A) die Simulationskammer (250) mit einem Mantel (251) bildet, der den Zwischenkolben (240) aufnimmt, und das hintere Teil (290B) den Tauchkolben (270) unterbringt,
wobei die Rückstellfeder (274) des Tauchkolbens (270) zwischen dem Tauchkolben (270) und dem Zwischenkolben (240) platziert ist.

7. Bremssystem nach Anspruch 1,
**dadurch gekennzeichnet, dass**
es eine Steuerschaltung (400) und einen Druckfühler (350), der mit dem hinteren Volumen (V1) der Simulatorkammer (250) verbunden ist, die zwischen dem Tauchkolben (270) und dem Zwischenkolben (240) liegt, umfasst, um den Druck zu erfassen, der in diesem Volumen (V1) herrscht und ein Drucksignal (SP) an die Steuerschaltung (400) zu übertragen,
wobei die Steuerschaltung (400) mit dem ersten Magnetventil (EV1) und dem zweiten Magnetventil
(EV2) sowie mit dem Motor (265) des Zahnstangenantriebs (260) verbunden ist, um den normalen Betrieb des Bremskraftverstärkers und den Notbetrieb zu steuern.

8. Managementverfahren eines Bremssystems mit elektrischem Bremskraftverstärker nach einem der vorhergehenden Ansprüche,
**dadurch gekennzeichnet, dass**
- die Steuerschaltung (400) im normalen Betrieb den Motor (265) des Zahnstangenantriebs (260) des Bremskraftverstärkers und das erste Magnetventil (EV1) steuert, um das hintere Volumen (V1) und das vordere Volumen (V2) der Simulatorkammer (250) in Kommunikation zu versetzen, um die Wechselwirkung des Tauchkolbens (270) und des Zwischenkolbens (240) zu neutralisieren,
wobei der Schubschaft (130) nur von dem Betätigungskolben (220) angetrieben wird,
- die Steuerschaltung (400) im Notbetrieb das erste Magnetventil (EV1) steuert, das in Schließposition übergeht, die die Fluidkommunikation zwischen dem hinteren Volumen (V1) und dem vorderen Volumen (V2) der Simulatorkammer (250) trennt, und das zweite Magnetventil (EV2), um sich zu öffnen und das vordere Volumen (V2) mit dem Behälter (115) in Kommunikation zu versetzen, wobei der Schubschaft (130) nur von der Bewegung des Zwischenkolbens (240) betätigt wird, der von der Bewegung des Tauchkolbens (270) gesteuert wird, wobei das isolierte Volumen (V1) durch das Schließen des ersten Magnetventils (EV1) konstant gehalten wird.

## Claims

1. Brake system with electric servobrake comprising a servobrake acting in a controlled manner on the master cylinder via a thrust rod driven by the servobrake and actuating the piston (primary piston) of the master cylinder, the servobrake being linked by a hydraulic actuator to the control rod of the brake pedal, **characterized in that**
the servobrake (200) comprises
- an actuator piston (220) controlled by an electric motor (265) via a rack drive (260),
- a simulator chamber (250) delimited by the hydraulic actuator (270) and subdivided by an intermediate piston (240) into a rear volume (V1) and a front volume (V2), which are variable,
* the rear volume (V1) being delimited by the hydraulic actuator (270) and the intermediate piston (240),
* the front volume (V2) being delimited in the simulator chamber (250) by the intermediate piston (240),
- a duct (L1) linking the rear volume (V1) to a duct (L2) linked to the front volume (V2) via a first solenoid valve (EV1), the duct (L2) being linked to the tank (115) by a second solenoid valve (EV2),
* the first solenoid valve (EV1) being controlled in the open position, its uncontrolled position being the closed position,
* the second solenoid valve (EV2) being controlled in the closed position, its uncontrolled position being the open position,
- the intermediate piston (240) is linked to the thrust rod (130) bearing an abutment (132) to be thrust by the actuator piston (220),
- the thrust rod (130) being able to be thrust by the intermediate piston (240) independently of the actuator piston (220).

2. Brake system according to Claim 1,
**characterized in that**
the duct (L3) at the output of the first solenoid valve (EV1) is linked to a brake simulator (410).

3. Brake system according to Claim 1,
**characterized in that**
the actuator piston (220) consists of a sleeve (221), the outer surface of which includes racks (261) in positions that are diametrically opposite relative to the axis (XX) of the system for guiding and driving in translation the actuator piston (220) partly overlapping the simulator chamber (250).

4. Brake system according to Claim 1,
**characterized in that**
the intermediate piston (240) has a section (S1) greater than the section (S2) of the hydraulic actuator (270).

5. Brake system according to Claim 1,
**characterized in that**
the body (201) of the servobrake (200) consists of a front part (280) and a rear part (290),
- the substantially cylindrical front part (280) receiving the rear (102) of the housing (101) of the master cylinder (100) via an assembly ring (281) and the two pinions (262) of the rack drive (260) and the actuator piston (220) bearing the racks (261), this front part (280) also being provided with the transmission (263) and the motor (265) of the rack drive (260) as well as the front part (130A) of the thrust rod (130) with its abutment (132) and the return spring (255),
- the rear part (290) comprising the intermediate piston (240) attached to the rear part (130B) of the thrust rod, the return spring (271) of the intermediate piston (240) and the hydraulic actuator (270) and its return spring (274).

6. Brake system according to Claim 5,
**characterized in that**
the rear part (290) consists of two pieces (290A, 290B) of which the front piece (290A) forms the simulator chamber (250) with a jacket (251) receiving the intermediate piston (240) and the rear piece (290B) houses the hydraulic actuator (270),
the return spring (274) of the hydraulic actuator (270) being placed between the hydraulic actuator (270) and the intermediate piston (240).

7. Brake system according to Claim 1,
**characterized in that**
it comprises a control circuit (400) and a pressure sensor (350) linked to the rear volume (V1) of the simulator chamber (250), contained between the hydraulic actuator (270) and the intermediate piston (240) to detect the pressure prevailing in this volume (V1) and transmit a pressure signal (SP) to the control circuit (400),
the control circuit (400) being linked to the first solenoid valve (EV1) and to the second solenoid valve (EV2) as well as to the motor (265) of the rack drive (260) to control the normal operation of the servobrake and the emergency operation.

8. Method for managing a brake system with electric servobrake according to any one of the preceding claims,
**characterized in that**
- in normal operating mode, the control circuit (400) controls the motor (265) of the rack drive (260) of the servobrake and the first solenoid valve (EV1) to connect the rear volume (V1) and the front volume (V2) of the simulator chamber (250) to neutralize the interaction of the hydraulic actuator (270) and the intermediate piston (240),
the thrust rod (130) being only driven by the actuator piston (220),
- in emergency operating mode, the control circuit (400) controls the first solenoid valve (EV1) which switches to the closed position separating the fluid connection between the rear volume (V1) and the front volume (V2) of the simulator chamber (250) and the second solenoid valve (EV2) to open and connect the front volume (V2) with the tank (115), the thrust rod (130) being only actuated by the displacement of the intermediate piston (240) controlled by the displacement of the hydraulic actuator (270), the isolated volume (V1) being kept constant by the closure of the first solenoid valve (EV1).
